# EUROPEAN PATENT APPLICATION

(11) **EP 2 738 724 A1**
(43) Date of publication of application: **04.06.2014**
(21) Application number: 12195332.7
(22) Date of filing: 03.12.2012
(51) Int. Cl.: G06Q 20/36, G06Q 20/06, G06Q 40/02

(54) **System and method for transferring electronic money**

(71) Applicant: The Roberto Giori Company Ltd., 1009 Pully (CH)
(72) Inventor: Pinault, Francis, 34990 Juvignac (FR)
(74) Representative: Santarelli

(57) **Abstract**

The present invention concerns a system and method for transferring electronic money. More particularly, it relates to improving the checking method used to validate the transfer at a central server. Furthermore the proposed solution improves the traceability of the operations. It is also proposed a data record to implement efficiently the electronic money.

Its purpose is to make the check of the consistency of the history of transactions related to a particular electronic banknote easier. The proposed solution minimizes the access to the database by embedding the history of transaction within the coding of the electronic banknote itself.

## Description

The present invention concerns a system and method for transferring electronic money. More particularly, it relates to improving the checking method used to validate the transfer at a central server. Furthermore the proposed solution improves the traceability of the operations. It is also proposed a data record to implement efficiently the electronic money.

The electronic money is used within a global system as, for instance, the global system described in the patent application published under reference WO 2012/120011 A1 by the applicant. This system is named after inventor Roberto Giori the Global Standard for Money Technology (GSMT). In such a system, the electronic money is represented by a unique identification named IEDB standing for Identification of an Electronic/Digital Banknote. This IEDB is included in a digital data named RIEDB standing for reference of IEDB.

This electronic money is carried out by its owner in a digital wallet typically implemented as an application in a portable electronic device such as a mobile phone. The system is supervised and controlled by a centralized entity. This entity maintains a database of all the currency managed by the system. It also maintains a database of references of all the users of the system. The users may be registered users owning a reference in the system. In some embodiments the users may be known only by their mobile phone number registered in the course of a transaction.

While the system is registering all the transfers carried out by the users, the reconstitution of all the transactions related to a given electronic banknote is a difficult task. It takes time and it is needed to track all the transfer to find out the ones involving the given banknote.

It is known that the exchanges between mobile phone and systems shall be minimized for cost and real times reasons. The question of the size of exchanged data may be important, for example when the short message service is chosen as a transport bearer. So when this electronic money is carried out by the systems it is important to minimize the length of the data.

The present invention has been devised to address one or more of the foregoing concerns. Its purpose is to make the check of the consistency of the history of transactions related to a particular electronic banknote easier. The proposed solution minimizes the access to the database by embedding the history of transaction within the coding of the electronic banknote itself.

According to a first aspect of the invention there is provided a data record representing an electronic banknote comprising an identifier of the electronic banknote; further comprising embedded within the data record the history of the transactions involving said electronic banknote.

In an embodiment, the history of transaction is represented by a field containing the number of transactions and for each transaction a data record representing the transaction.

In an embodiment, the history of transaction is represented by a field containing the length of said data record representing the electronic banknote and for each transaction a data record representing the transaction.

In an embodiment, the data record representing the transaction comprises an identifier of the electronic banknote; an identifier of the emitter in the transaction; an identifier of the recipient in the transaction; the face value of the electronic banknote; the date of the transaction and the time of the transaction.

In an embodiment, the data record representing the transaction further comprises the location of the transaction.

In an embodiment, the data record representing the transaction further comprises a control sum of said data record representing the transaction.

In an embodiment, the data record representing the transaction further comprises a digital signature of said data record representing the transaction by an authority managing the electronic banknote.

In an embodiment, the data record representing the transaction comprises a reference of a data record representing the transaction within a database.

According to another aspect of the invention there is provided a method for handling an electronic banknote transaction between an emitter and a recipient, comprising by a server a step of receiving a request from the emitter including the identifier of the emitter, the identifier of the receiver and a data record according to the invention representing the electronic banknote to be transferred; a step of validating the data record representing the electronic banknote; a step of generating the outstanding transaction; a step of integrating the outstanding transaction in an updated data record representing the electronic banknote; a step of sending a request to the recipient for validation including the updated data record representing the electronic banknote; a step of receiving an acknowledgment of the transaction from the recipient and a step of validating the transaction.

In an embodiment, the step of validating the data record comprises a step of validating the emitter identifier; a step of validating the integrity and coherency of the history of transaction and a step of validating the recipient identifier.

In an embodiment, the method further comprises a step of creating a user identifier in the server for the recipient when the recipient is not already known.

According to another aspect of the invention there is provided a method for handling an electronic banknote transaction between an emitter and a recipient, **characterized in that** it comprises by a mobile device of the emitter a step of generating a request including the identifier of the emitter, the identifier of the receiver and a data record according to the invention representing the electronic banknote to be transferred; a step of sending said request to the server; a step of receiving an acknowledgment from the server and a step of updating the virtual wallet of the emitter by removing the transferred electronic banknote.

In an embodiment, the method further comprises a step of sending to the mobile device of the recipient a request for the identifier of the recipient and a step of receiving from the mobile device of the recipient the requested identifier.

According to another aspect of the invention there is provided a method for handling an electronic banknote transaction between an emitter and a recipient, comprising by a mobile device of the recipient a step of receiving a validation request including the identifier of the emitter and a data record according to the invention representing the electronic banknote to be transferred; a step of validating said validation request; a step of sending an acknowledgment to the server and a step of updating the virtual wallet of the recipient by adding the transferred electronic banknote.

In an embodiment, the method further comprises a step of receiving from the mobile device of the emitter a request for the identifier of the recipient and a step of sending to the mobile device of the emitter the requested identifier.

According to another aspect of the invention there is provided a server device for handling an electronic banknote transaction between an emitter and a recipient, comprising means for receiving a request from the emitter including the identifier of the emitter, the identifier of the receiver and a data record according to the invention representing the electronic banknote to be transferred; means for validating the data record representing the electronic banknote; means for generating the outstanding transaction; means for integrating the outstanding transaction in an updated data record representing the electronic banknote; means for sending a request to the recipient for validation including the updated data record representing the electronic banknote; means for receiving an acknowledgment of the transaction from the recipient and means for validating the transaction.

According to another aspect of the invention there is provided a mobile device for handling an electronic banknote transaction between an emitter and a recipient, comprising means for generating a request including the identifier of the emitter, the identifier of the receiver and a data record according to the invention representing the electronic banknote to be transferred; means for sending said request to the server; means for receiving an acknowledgment from the server and means for updating the virtual wallet of the emitter by removing the transferred electronic banknote.

According to another aspect of the invention there is provided a mobile device for handling an electronic banknote transaction between an emitter and a recipient, comprising means for receiving a validation request including the identifier of the emitter and a data record according to the invention representing the electronic banknote to be transferred; means for validating said validation request; means for sending an acknowledgment to the server and means for updating the virtual wallet of the recipient by adding the transferred electronic banknote.

According to another aspect of the invention there is provided a computer program product for a programmable apparatus, the computer program product comprising a sequence of instructions for implementing a method according to the invention, when loaded into and executed by the programmable apparatus.

According to another aspect of the invention there is provided a computer-readable storage medium storing instructions of a computer program for implementing a method according to the invention.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present invention may take the form of a computer program product embodied in any tangible medium of expression having computer usable program code embodied in the medium.

Since the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

Embodiments of the invention will now be described, by way of example only, and with reference to the following drawings in which:
**Figure 1** illustrates the general architecture of the elements in the system involved in an electronic money transfer;
**Figure 2** illustrates the structure of a record representing an electronic banknote according to an embodiment of the invention;
**Figure 3** illustrates the structure of a record representing a transaction according to an embodiment of the invention;
**Figure 4** illustrates the data exchanges occurring in an electronic money transfer according to an embodiment of the invention;
**Figure 5** illustrates the schematic block diagram of a computing device for implementation of one or more embodiments of the invention.

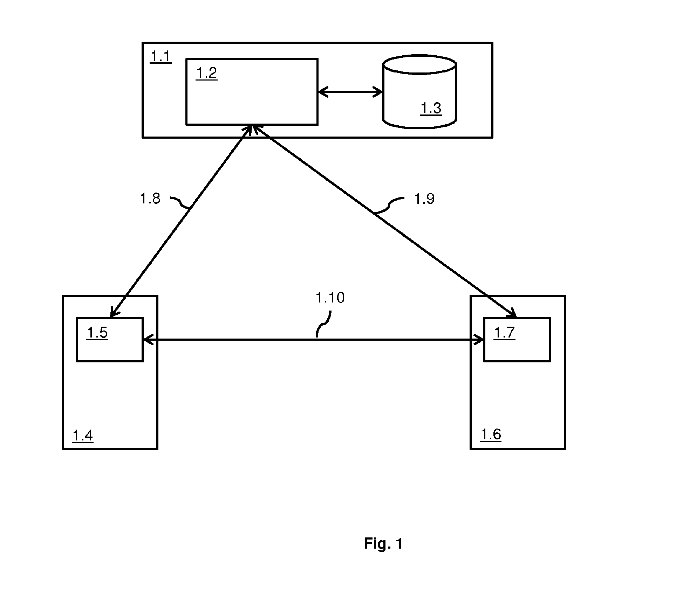

**Figure 1** illustrates the general architecture of the elements in the system involved in an electronic money transfer. The system comprises a central server **1.1.** This server may be physically implemented with a plurality of physical servers that may or not be located in a single place. Logically, it is constituted by a database that stores and handles different data stores. A first store registers all the electronic banknotes managed by the system. A second store registers the users of the system. These users may be registered users with a unique identity in the system. In some embodiment of the invention, some users may only be known by their phone number. Actually, this allows the system to be largely used by people without needing to create an account. The formalities to get a mobile phone subscription will replace a regular registration in the system.

A front end **1.2** is implementing the different functionalities made available to the users. It gathers the registration of a unique identity of users, the management of this unique identity and the management of the transfer of electronic money involved during a transaction between two users.

A first user owns a first mobile device **1.4** holding a virtual wallet **1.5.** Similarly, a second user owns a second mobile device **1.6** handling a second virtual wallet **1.7.** It should be understood that these mobile device may be of any kind as long as they got a user interface to interact with the user, memory storage to store the data representing the virtual wallet and communication means to communicate, references **1.8** and **1.9,** with the front end **1.2.** These communication means are typically using the data communication abilities of the device used for the connection to a data network as Internet. Advantageously, but not necessarily they may also include communication means to communicate directly, reference **1.10,** with each other. These direct means of communication may use wireless communication as Bluetooth, WiFi, NFC (standing for Near Field Communication) or others. All these technologies allow establishing a direct communication between two devices in the vicinity of each other and exchanging some data. Typically, the mobile device is a mobile phone, preferably of the smartphone category.

A typical electronic money transfer involves the following operations. Assuming the first user is the emitter, a request for the transfer is submitted from the virtual wallet **1.5** to the front end **1.2.** This request includes the identity in the system of the emitter. This identity may be constituted by the GSMT unique identifier of the user or by its phone number depending on the embodiment of the invention. The request also includes the identifier of the electronic banknote to be transferred and the identity of the recipient. This identity may be entered in the mobile device **1.4** by the emitter or advantageously it may be communicated by the second mobile device **1.6** using direct communication means **1.10.** Advantageously it also includes the face value of the banknote to be transferred, the time of the transaction request and the location of the emitter at that time.

When received by the frontend server **1.2,** the request is checked to determine its validity. Typically, the identity of the emitter is checked with its right to carry out such a transfer. The identity of the recipient is also checked. It is also checked to whether the electronic banknote is registered to actually belong to the emitter. The procedure may include other checks not described here. Next, if all these checks succeed, the frontend **1.2** send a request for approval of the transfer to the recipient, namely the second user. This request is sent to the second mobile device using the communication means **1.9.** The second user has to approve the transaction. An acknowledgment is then sent from the second mobile device to the frontend **1.2.** The frontend validates the transaction and acknowledges it to both users. The electronic money is no longer available in the virtual wallet of the first user while being present in the virtual wallet of the second user. At the server level, the electronic banknote is registered as belonging to the second user.

As a regular paper banknote, the electronic banknote passes from hand to hand as described. To improve the safety of the system and for traceability reason, it is desirable to be able to check the consistency of the history of transaction of a given electronic banknote at the moment of a transaction. This may be done at the server level but it implies some heavy requests in the database to build the history of all the transactions involving a given electronic banknote. Considering the global system contemplated by the invention, carrying out such history check by digging the global database while insuring real time operation of electronic money transfer is very difficult.

The gist of the invention is to embed the history of the transactions involving an electronic banknote within the electronic representation of the banknote itself. An exemple of detailed embodiment of the invention will now be described in a non-limitative way.

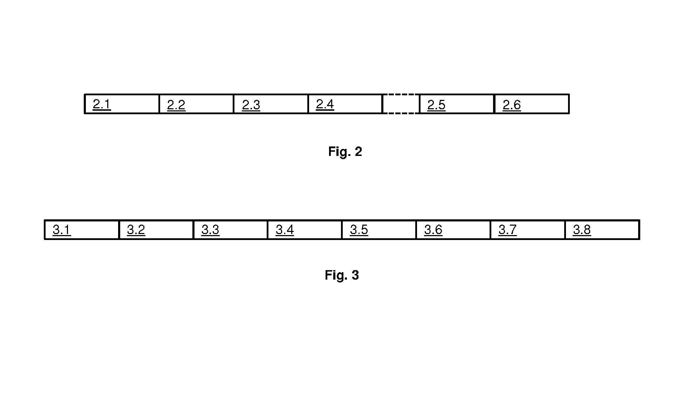

**Figure 2** illustrates the structure of a record representing an electronic banknote according to an embodiment of the invention. The first field **2.1** is the length of the data record in byte. Alternatively, this field may contain the length of the data record and the number of transactions stored within. The second field **2.2** is the IEDB itself, meaning the identifier of the electronic banknote. Advantageously, the third field **2.3** is the face value of the electronic banknote. Next, the data record includes the fields registering the transactions from field **2.4** to field **2.5** which number is variable. The structure of the transaction field will be detailed below in relation with **Figure 3****.** Advantageously, a last field **2.6** is there to insure the consistency of the record. This may be a checksum as, for instance, a CRC (Cyclic Redundancy Check). Preferably this field consists in a digital signature of the record by the server using asynchronous cryptography signature algorithm. Accordingly the record may be checked for its authenticity and its integrity.

**Figure 3** illustrates the structure of a record representing a transaction according to an embodiment of the invention. According to this embodiment, the first field **3.1** of the record is the identifier of the banknote, namely the IEDB. The second field **3.2** of the record is face value of the banknote. The field **3.3** is the emitter identifier. This identifier may be the GSMT user identifier of the emitter or alternatively his phone number. Next, the field **3.4** of the record is the identifier of the recipient of the transfer. Advantageously, the record may include the date **3.5** of the transaction with the time **3.6.** It may also include the location **3.7.** The location may be obtained automatically by virtue of geolocation means included in the mobile device. Today, most of the smartphone on the market include some geolocation means based on the Global Positioning System or GPS. These geolocation means may also be based on GSM base station triangulation or databases containing the location of WiFi access points. Advantageously, a last field **3.8** is there to insure the consistency of the record. This may be a checksum as, for instance, a CRC (Cyclic Redundancy Check). Preferably this field consists in a digital signature of the record by the server using asynchronous cryptography signature algorithm. Accordingly the record may be checked for its authenticity and its integrity.

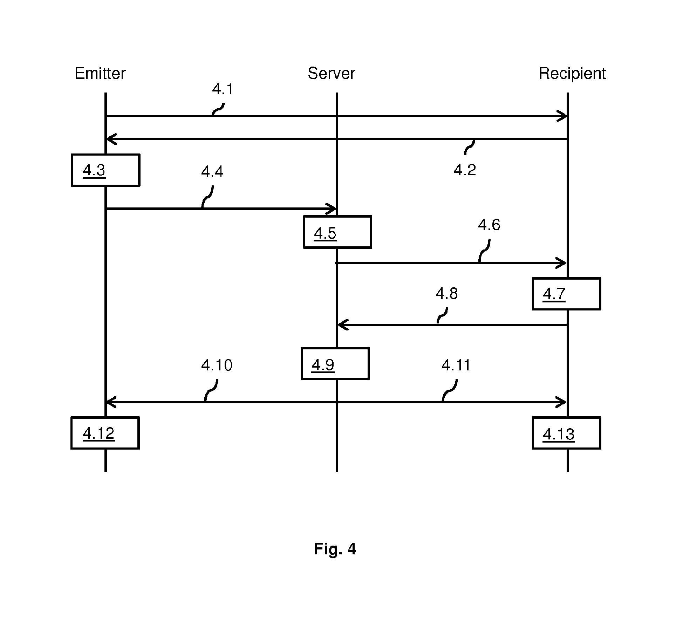

**Figure 4** illustrates the data exchanges occurring in an electronic money transfer according to an embodiment of the invention. The main steps involved in a method to carry out an electronic banknote transfer will now be described. The money transfer involves an emitter who is the owner of the electronic banknote and a recipient who is the recipient of the transfer. The server represents the authority managing the electronic money. Both the emitter and the recipient should have a virtual wallet typically operated by a mobile device such as a smartphone. The electronic banknote subject of the transfer belongs initially to the emitter and is managed in his virtual wallet on his mobile device. The emitter as an owner of electronic money is known from the authority managing this electronic money. He owns a unique identity on the server and is identified by a so called GSMT identifier. In some embodiment, this identifier may be his mobile phone number. Typically, the recipient is also known by the authority and also owns a unique identity on the server. In some embodiments, the recipient may be new to the authority. In the latter case, a unique identity will be created on the server in the process of the transfer. This unique identity will then be typically linked to the mobile phone number of the recipient. This unique identity may be automatically created for example based on the mobile phone subscription of the recipient using his phone number.

In a first step, the emitter needs to know about the recipient identifier, this identifier being a GSMT identifier or the phone number. This identifier may be communicated by the recipient to the emitter and entered in the virtual wallet by the latter. Advantageously, the emitter and the recipient establish a direct connection between their devices. This direct connection may be established based on Bluetooth, WiFi or NFC technologies. It may also be established over Internet using the data capabilities of the smartphones. Once the connection is established, the emitter virtual wallet sends a request **4.1** to the receiver virtual wallet to request the recipient identifier. The recipient's virtual wallet replies to this request with the message **4.2** containing the requested identifier.

During step **4.3,** the virtual wallet of the emitter generates a request **4.4** to be sent to the server of the authority for the transfer. Advantageously this request includes the identifier of the emitter, the identifier of the receiver and the data record representing the electronic banknote to be transferred. This data record is typically the data record described in relation to **Figure 2****.**

During step **4.5,** the server is first making some checks on the received request to validate the request. A first check is made on the identity of the emitter. For instance, it is verified if this user is known and is not subject to any restriction. The receiver is also checked for the same. In some embodiments, if the user is not already registered in the system, his unique identity is created at this moment. Next the data record representing the electronic banknote is validated. By virtue of the history of transactions embedded in the data record representing the electronic banknote, it is possible to check the coherency of the transaction chain. Therefore it is possible to check that the current owner is coherent with all the past transaction related to this banknote. This verification may be carried out without needing to access the database. This is a great advantage considering that the system is supposed to handle a great amount of users and transaction and that the response of the server needs to be made as fast as possible to allow a real time. By embedding the history of transactions right into the data record representing the electronic banknote, the desirable verifications may be conducted easily and rapidly saving the need to access in real time the huge central database to consolidate the chain of transactions in order to determine if the emitter is the actual owner of the banknote. Next, the record of the outstanding transaction is generated and integrated in the data record representing the electronic banknote. Its storage stands by waiting to the validation by the recipient.

Next, a request for validation **4.6** is sent to the recipient. Advantageously, this request includes the identifier of the emitter and the data record representing the electronic banknote including the outstanding transaction. During step **4.7,** the transaction is presented to the recipient for validation. Once the transaction has been validated by the recipient an acknowledgment **4.8** is sent back to the server. According to a particular embodiment of the invention, the recipient's virtual wallet may be adapted to carry out a validity check on the data record representing the electronic banknote. By virtue of the presence of the embedded history of transactions within the data record, a check of the transaction chain may be made by the wallet of the recipient. This allows the recipient to validate on his own the electronic money which is proposed to him without the need to access the central server.

During step **4.9,** the server checks the received data record representing the electronic banknote and checks it for coherency and validity. The outstanding transaction is then validated and stored in the database. Acknowledgments **4.10** and **4.11** are sent to both the emitter and the receiver to validate the transaction. The virtual wallets of the emitter and the recipient are updated accordingly in step **4.12** respectively **4.13.** The transferred banknote is removed from the virtual wallet of the emitter and added to the virtual wallet of the recipient.

As an electronic banknote may be subject to numerous transactions, the data record representing it may reach an important size. Advantageously, in an alternative embodiment, the complete data record representing the transaction in the data record representing the banknote is replaced by a reference of this data record stored in the server. This reference must allow the server to retrieve unequivocally the data record representing the transaction. It may be constituted by a unique identifier of the data record in the database. It may also be constituted by a hash function of the data record. It may also be constituted by a date referenced at absolute date with enough precision to give a reference. In general the date is coded on 64 bits (8 bytes). By storing only the references of the transaction embedded in the data record representing the electronic banknote this data record is kept of reasonable size.

It is to be noted that, in some embodiment of the system, the history of transactions is used to allow *a postiori* checks on the electronic banknote. The aim is to prevent a person to use the identity of a banknote to submit illegal transactions. Without the history of transaction, it would be possible to submit a request for a transaction using the banknote id which is not coherent with the global chain of transaction registered for this banknote. An *a postiori* check may consist in checking that the references of the transactions registered within the electronic banknote corresponds to the ones registered in the server. To do so, it is sufficient to compute the reference of each transaction involved in the history of transaction and check if this reference match the reference stored in the embedded history of transaction. Therefore, it is not needed that the reference stored in the embedded history of transaction represents the transaction unequivocally. A regular hash function may be used to this goal. By doing so, an old version of the electronic banknote with its embedded history of transaction that might have been stolen may not be used to generate a further illegal transaction.

The database storing the transaction may be used for statistical reason and history of transaction may be carried on based on the identity of the banknote, the date of the transaction, the identity of the user and the location. It may be used to detect malicious usages based on the frequency of transaction and locations. Malicious users may be identified.

However for some exchanges, it might be advantageous to further reduce the size of the exchanged data on the network. Typically, if the short messages service (SMS) is used as a transport bearer. The typical length of a SMS message is 160 bytes. In a context where a reasonable number of references of transactions must be kept in the data record and that the absolute date the invention is used as a reference, it is possible to code date by coding a difference with a reference date instead of coding the absolute date. The difference may be coded using only 32 bits where the absolute date is typically coded using 64 bits. The reference date may be, for exemple 1/01/2012 00:00:00 or the date of the first transaction of the given banknote.

Advantageously, to keep a maximum of number of transaction, it is possible to reduce the size of the references of previous transactions. For example, the original format of the date might be kept while reducing by truncation some of the time references. This process may be adapted according to number of existing references in the data record representing the banknote.

In the case where only transaction references are embedded in the electronic banknote, the check of the complete transaction chain to validate the owner of the banknote may be carried out in *a posteriori* check process to avoid accessing the database during the real time validation of the outstanding transaction. A check of the control sum, or better the electronic signature, of the data record associated with the *a posteriori* check of the complete transaction chain may be considered as sufficient to ensure a good level of security on the transfer.

According to the invention, a complete traceability of the transactions related to a given banknote is provided. This traceability may be checked without the need of digging a central data base. The traceability information is linked to the electronic banknote and follows it being embedded within the electronic representation of this banknote.

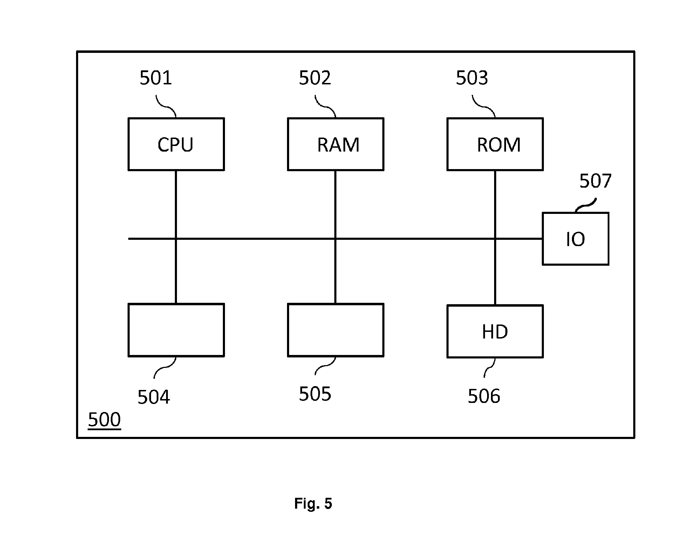

**Figure 5** is a schematic block diagram of a computing device **500** for implementation of one or more embodiments of the invention, typically the device handling the virtual wallet. The computing device **500** may be a device such as a micro-computer, a workstation or a light portable device. The computing device **500** comprises a communication bus connected to:
- a central processing unit **501,** such as a microprocessor, denoted CPU;
- a random access memory **502,** denoted RAM, for storing the executable code of the method of embodiments of the invention as well as the registers adapted to record variables and parameters necessary for implementing the method for encoding or decoding at least part of an image according to embodiments of the invention, the memory capacity thereof can be expanded by an optional RAM connected to an expansion port for example;
- a read only memory **503,** denoted ROM, for storing computer programs for implementing embodiments of the invention;
- a network interface **504** is typically connected to a communication network over which digital data to be processed are transmitted or received. The network interface **504** can be a single network interface, or composed of a set of different network interfaces (for instance wired and wireless interfaces, or different kinds of wired or wireless interfaces). Data packets are written to the network interface for transmission or are read from the network interface for reception under the control of the software application running in the CPU **501;**
- a user interface **505** may be used for receiving inputs from a user or to display information to a user;
- a hard disk **506** denoted HD may be provided as a mass storage device, alternatively, the mass storage may be constituted of flash memory;
- an I/O module **507** may be used for receiving/sending data from/to external devices such as a video source or display.

The executable code may be stored either in read only memory **503,** on the hard disk 506 or on a removable digital medium such as for example a disk. According to a variant, the executable code of the programs can be received by means of a communication network, via the network interface **504,** in order to be stored in one of the storage means of the communication device **500,** such as the hard disk **506,** before being executed.

The central processing unit **501** is adapted to control and direct the execution of the instructions or portions of software code of the program or programs according to embodiments of the invention, which instructions are stored in one of the aforementioned storage means. After powering on, the CPU **501** is capable of executing instructions from main RAM memory **502** relating to a software application after those instructions have been loaded from the program ROM **503** or the hard-disc (HD) **506** for example. Such a software application, when executed by the CPU **501,** causes the steps of the flowcharts shown in **Figures 1 to 4** to be performed.

Any step of the algorithm shown in **Figure 4** may be implemented in software by execution of a set of instructions or program by a programmable computing machine, such as a PC ("Personal Computer"), a DSP ("Digital Signal Processor") or a microcontroller; or else implemented in hardware by a machine or a dedicated component, such as an FPGA ("Field-Programmable Gate Array") or an ASIC ("Application-Specific Integrated Circuit").

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

## Claims

**1.** A data record (Fig. 2) representing an electronic banknote comprising:
- an identifier (2.2) of the electronic banknote; **characterized in that** it further comprises embedded within the data record:
- the history of the transactions (2.1, 2.4, 2.5) involving said electronic banknote.

**2.** A data record according to claim 1, **characterized in that** the history of transaction is represented by:
- a field (2.1) containing the number of transactions; and
- for each transaction a data record (2.4, 2.5) representing the transaction.

**3.** A data record according to claim 1, **characterized in that** the history of transaction is represented by:
- a field (2.1) containing the length of said data record representing the electronic banknote; and
- for each transaction a data record (2.4, 2.5) representing the transaction.

**4.** A data record according to claim 2 or 3, **characterized in that** the data record (Fig. 3) representing the transaction comprises:
- an identifier (3.1) of the electronic banknote;
- an identifier (3.3) of the emitter in the transaction;
- an identifier (3.4) of the recipient in the transaction;
- the face value (3.2) of the electronic banknote;
- the date (3.5) of the transaction; and
- the time (3.6) of the transaction.

**5.** A data record according to claim 4, **characterized in that** the data record (Fig. 3) representing the transaction further comprises:
- the location (3.7) of the transaction.

**5.** A data record according to claim 4 or 5, **characterized in that** the data record (Fig. 3) representing the transaction further comprises:
- a control sum (3.8) of said data record representing the transaction.

**6.** A data record according to claim 4 or 5, **characterized in that** the data record (Fig. 3) representing the transaction further comprises:
- a digital signature (3.8) of said data record representing the transaction by an authority managing the electronic banknote.

**7.** A data record according to claim 2 or 3, **characterized in that** the data record representing the transaction comprises:
- a reference of a data record representing the transaction within a database.

**8.** A method for handling an electronic banknote transaction between an emitter and a recipient, **characterized in that** it comprises by a server (1.1):
- a step of receiving a request (4.4) from the emitter (1.4) including the identifier of the emitter, the identifier of the receiver and a data record according to one of claims 1 to 7 representing the electronic banknote to be transferred;
- a step (4.5) of validating the data record representing the electronic banknote;
- a step (4.5) of generating the outstanding transaction;
- a step (4.5) of integrating the outstanding transaction in an updated data record representing the electronic banknote;
- a step of sending a request (4.6) to the recipient (1.6) for validation including the updated data record representing the electronic banknote;
- a step of receiving an acknowledgment (4.8) of the transaction from the recipient (1.6); and
- a step (4.9) of validating the transaction.

**9.** A method according to claim 8, **characterized in that** the step of validating the data record comprises:
- a step of validating the emitter identifier;
- a step of validating the integrity and coherency of the history of transaction; and
- a step of validating the recipient identifier.

**10.** A method according to claim 8 or 9, **characterized in that** it further comprises:
- a step of creating a user identifier in the server for the recipient when the recipient is not already known.

**11.** A method for handling an electronic banknote transaction between an emitter and a recipient, **characterized in that** it comprises by a mobile device (1.4) of the emitter:
- a step (4.3) of generating a request including the identifier of the emitter, the identifier of the receiver and a data record according to one of claims 1 to 7 representing the electronic banknote to be transferred;
- a step (4.4) of sending said request to the server (1.1);
- a step (4.10) of receiving an acknowledgment from the server; and
- a step (4.12) of updating the virtual wallet of the emitter by removing the transferred electronic banknote.

**12.** A method according to claim 11, **characterized in that** it further comprises:
- a step (4.1) of sending to the mobile device of the recipient a request for the identifier of the recipient; and
- a step (4.2) of receiving from the mobile device of the recipient the requested identifier.

**13.** A method for handling an electronic banknote transaction between an emitter and a recipient, **characterized in that** it comprises by a mobile device (1.4) of the recipient:
- a step (4.6) of receiving a validation request including the identifier of the emitter and a data record according to one of claims 1 to 7 representing the electronic banknote to be transferred;
- a step (4.7) of validating said validation request;
- a step (4.8) of sending an acknowledgment to the server; and
- a step (4.13) of updating the virtual wallet of the recipient by adding the transferred electronic banknote.

**14.** A method according to claim 13, **characterized in that** it further comprises:
- a step (4.1) of receiving from the mobile device of the emitter a request for the identifier of the recipient; and
- a step (4.2) of sending to the mobile device of the emitter the requested identifier.

**15.** A server device for handling an electronic banknote transaction between an emitter and a recipient, **characterized in that** it comprises:
- means for receiving a request (4.4) from the emitter (1.4) including the identifier of the emitter, the identifier of the receiver and a data record according to one of claims 1 to 7 representing the electronic banknote to be transferred;
- means for validating the data record representing the electronic banknote;
- means for generating the outstanding transaction;
- means for integrating the outstanding transaction in an updated data record representing the electronic banknote;
- means for sending a request (4.6) to the recipient (1.6) for validation including the updated data record representing the electronic banknote;
- means for receiving an acknowledgment (4.8) of the transaction from the recipient (1.6); and
- means for validating the transaction.

**16.** A mobile device for handling an electronic banknote transaction between an emitter and a recipient, **characterized in that** it comprises:
- means for generating a request including the identifier of the emitter, the identifier of the receiver and a data record according to one of claims 1 to 7 representing the electronic banknote to be transferred;
- means for sending said request to the server (1.1);
- means for receiving an acknowledgment from the server; and
- means for updating the virtual wallet of the emitter by removing the transferred electronic banknote.

**17.** A mobile device for handling an electronic banknote transaction between an emitter and a recipient, **characterized in that** it comprises:
- means for receiving a validation request including the identifier of the emitter and a data record according to one of claims 1 to 7 representing the electronic banknote to be transferred;
- means for validating said validation request;
- means for sending an acknowledgment to the server; and
- means for updating the virtual wallet of the recipient by adding the transferred electronic banknote.

**18.** A computer program product for a programmable apparatus, the computer program product comprising a sequence of instructions for implementing a method according to any one of claims 8 to 14, when loaded into and executed by the programmable apparatus.

**19.** A computer-readable storage medium storing instructions of a computer program for implementing a method according to any one of claims 8 to 14.
